Europäisches Patentamt

European Patent Office

Office européen des brevets

(11) Publication number: **0 086 494**
A1

## (12) EUROPEAN PATENT APPLICATION

(21) Application number: **83101475.8**

(22) Date of filing: **16.02.83**

(51) Int. Cl.³: **F 02 N 15/04,** F 02 N 15/06, H 02 K 7/116

(30) Priority: **17.02.82 JP 22637/82**

(43) Date of publication of application: **24.08.83** Bulletin 83/34

(84) Designated Contracting States: **CH DE FR GB IT LI NL SE**

(71) Applicant: **Hitachi, Ltd., 5-1, Marunouchi 1-chome, Chiyoda-ku Tokyo 100 (JP)**

(72) Inventor: **Seki, Yoshinori, 1505-115, Takaba, Katsuta-shi (JP)**

(74) Representative: **Patentanwälte Beetz sen. - Beetz jun. Timpe - Siegfried - Schmitt-Fumian, Steinsdorfstrasse 10, D-8000 München 22 (DE)**

(54) **Reduction starter.**

(57) A reduction starter for starting up engine, having a motor (1) provided with an armature shaft (5) which is rotatingly driven as the motor (1) is supplied with electric power, a planetary reduction gear (8) connected to the armature shaft (5) and adapted to reduce the speed of rotation of the armature shaft (5), an output shaft (9) connected to the planetary reduction gear (8) and adapted to be driven by the latter at a reduced speed, an intermediate bracket (11) supporting one end of the output shaft (5) and surrounding the planetary reduction gear (8) and a pinion (18) mounted slidably on the output shaft (5) and adapted to mesh with a ring gear annexed to the engine thereby to transmit a starting torque to the engine. The planetary reduction gear (8) is formed as a unit with the intermediate bracket (11) by cutting gear teeth directly in the inner peripheral surface of the intermediate bracket (11).

- 1 -

0086494

REDUCTION STARTER

1 BACKGROUND OF THE INVENTION

FIELD OF THE INVENTION

The present invention relates to a reduction starter and, more particularly, to a reduction starter having an improved speed reduction mechanism.

DESCRIPTION OF THE PRIOR ART

Generally, there are various types of starters for starting up engines, among which a starter of the type called reduction starter is attracting atention because it permits the use of a high-speed and small-torque motor while providing a large torque at the pinion or output shaft. There are several types of reduction starters. One of such reduction starters has a planetary type reduction gear which permits a coaxial arrangement of the motor and the pinion. This type of reduction starter is now becoming important because of its simple appearance.

A typical known reduction starter incorporating a planetary reduction gear is constructed as follows.

Namely, the armature shaft of a motor for producing the torque and an output shaft mounting a pinion meshing with a ring gear are arranged coaxially and drivingly connected to each other through a planetary reduction gear. The armature shaft is supported at its both ends through bearings by a rear bracket and an intermediate bracket of a starter housing. Similarly, the output shaft is supported through bearings by another intermediate bracket and a front bracket. A gear housing is formed between the intermediate bracket supporting the armature shaft and the intermediate bracket supporting the output shaft. The planetary reduction gear is disposed in the gear housing. The planetary reduction gear has a sun gear attached to the end of the armature shaft projecting from the intermediate bracket. The sun gear meshes with a plurality of planet gears which are cantilevered by a carrier plate integral with the output shaft projecting from the other intermediate bracket. A ring gear having internal gear teeth is arranged around the planet gears to mesh with the latter. The ring gear is fitted in the inner peripheral surface of the intermediate bracket which is in support of the pinion shaft. The ring gear is fixed to the intermediate bracket so as not to rotate with respect to the latter. This type of reduction starter is disclosed in Japanese Utility Model Publication Laid-Open No. 107731/1978.

This reduction starter, however, suffers from the following problem attributable to the peculiar construction of the reduction gear. Namely, the ring gear which constitutes the outer peripheral part of the planetary reduction gear has to be fitted in the intermediate bracket in such a manner as not to rotate relatively to the intermediate bracket, so that the mechanical strength of the ring gear is lowered disadvantageously. In order to obtain sufficient mechanical strength of the ring gear, it is necessary to increase the outside diameter of the reduction gear·as a whole. In addition, the stable meshing condition among the sun gear, planet gears and ring gear is often failed resulting in a lowered reduction efficiency, because the planetary gears are cantilevered by the carrier plate fixedly mounted on the output shaft. Considering that the armature shaft and the output shaft are arranged coaxially, it is desirable to simplify the arrangement of bearings for these shafts. Actually, however, these shafts have to be supported independently at both ends thereof, because it is necessary to dispose the planetary reduction gear between these shafts. This arrangement undesirably increases the overall length of the reduction starter.

SUMMARY OF THE INVENTION

Accordingly, an object of the invention is to provide a reduction starter in which the construction of the planetary reduction gear is improved to permit a reduction in size and an increase of the speed reduction efficiency of the reduction starter thereby to overcome the above-described problems of the prior art.

0086494

To this end, according to the invention, there is provided a reduction starter comprising: a motor having an armature shaft; a planetary reduction gear drivingly connected to the armature shaft and adapted to reduce the speed of rotation of aid armature shaft; an output shaft drivingly connected to the planetary reduction gear and adapted to be driven rotatingly by the latter at a reduced speed; an intermediate bracket supporting one end of the output shaft and surrounding the planetary reduction gear; and a pinion slidably mounted on the output shaft and adapted to engage with a ring gear connected to an engine thereby to transmit the torque to the engine; the planetary reduction gear including a ring gear integral with the intermediate backet and having gear teeth formed in the inner peripheral surface of the intermediate bracket.

Preferably, the planet gears of the planetary reduction gear are carried by a carrier which is fixed to one end of the output shaft, and the armature is supported by this carrier through a bearing: namely, the armature shaft is supported by the output shaft through the carrier.

In the reduction starter of the invention, it is possible to reduce the outside diameter of the reduction gear because the ring gear is formed integrally with the intermediate bracket. In addition, it is possible to omit the intermediate bracket for supporting the armature shaft by constructing such that the armature shaft is supported at its one end by the output shaft through the medium of the carrier and, therefore, to reduce the overall length of the starter. For these reasons, according to the invention, it is possible to remarkably reduce the outside diameter of the reduction starter.

Other objects, features and advantages of the invention will become clear from the following description of the preferred embodiments taken in conjunction with the accompanying drawings.

BRIEF DESCRIPTION OF THE DRAWINGS

Fig. 1 is a sectional view of a reduction starter in accordance with an embodiment of the invention; and

Fig. 2 is a sectional view taken along the line II-II of Fig. 1.

DESCRIPTION OF THE PREFERRED EMBODIMENT

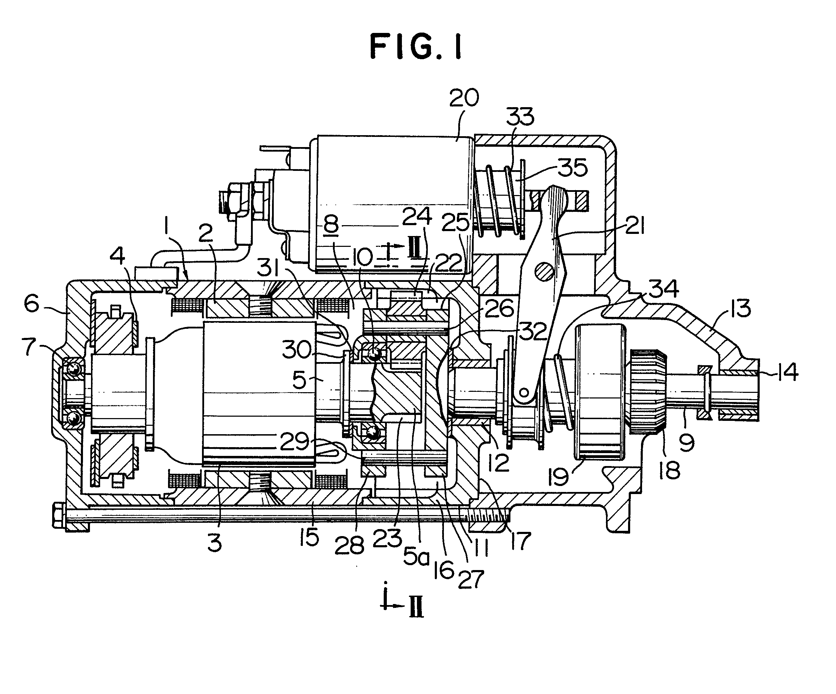

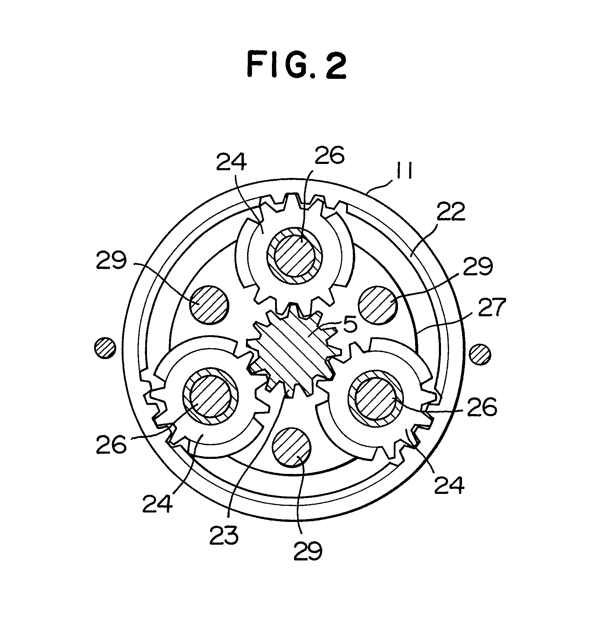

Fig. 1 shows the construction of a reduction starter embodying the present invention, while Fig. 2 shows in section a planetary gear mechanism incorporated in the reduction starter. This reduction starter includes as essential elements a motor for generating the torque, a planetary reduction gear for reducing the speed of rotation output of the motor, an output shaft connected to the reduction gear and adapted to be driven by the latter at the reduced speed, and a magnetic switch for pressing the pinion mounted on the output shaft.

More specifically, the motor 1 mounted in the housing of the reduction starter has a yoke 2, armature 3, brush holders 4 and so forth. This motor applies, when it is supplied with electric power, a torque to the armature 3 on an armature shaft 5 which is rotatably supported at its both ends. The rear end of the armature shaft 5, i.e. the left end as viewed in Fig. 1, is carried through a bearing 7 by a rear bracket 6 which constitutes the rear end wall of the housing. On the other hand, the front end 5a of the armature shaft 5 is drivingly connected to the output shaft 9 through the planetary reduction gear 8. The armature shaft 5 is supported at its front end by a bearing 10 within the planetary reduction gear 8.

The output shaft 9 is disposed coaxially with the armature shaft 5. The end of the output shaft adjacent to the armature shaft 9 is rotatably carried by the intermediate bracket 11 through a bearing 12 while the other end of the same is rotatably carried through a bearing 14 by a front bracket 13 which in turn is mounted on the intermediate bracket 11. The intermediate bracket 11 includes a peripheral wall 16 having a cylindrical form resembling the form of the outer wall 15 of the motor 1, and a partition wall 17 which is constructed and disposed transversely of a rotation axis of the motor. The aforementioned planetary reduction gear 8 is disposed within the intermediate bracket 11. The output shaft 9 carries a pinion 18 which is adapted to mesh with the ring gear (not shown) connected to the output shaft of an engine. A clutch 19 having an overrunning mechanism is disposed adjacent to the end of the pinion which is at the left side as viewed in Fig. 1. The pinion 18 and the clutch 19 are axially movable with respect to the output shaft 9, and are adapted to be pressed by a shift lever 21 connected to the magnetic switch 20 so as to put the pinion 18 into engagement with the ring gear (not shown) only when the engine is started. In the drawings, a reference numeral 33 designates a spring mounted on the movable core 35 of the magnetic switch 20 and adapted to urge rightwardly the core 35 and the upper end of the shift lever 21, while a reference numeral 34 designates a spring which biases the lower end of the shift lever 21 leftwardly.

The planetary reduction gear 8 incorporated in this reduction started has the following construction. Namely, a plurality of planet gears 8 mesh with the outer peripheral portion of a sun gear disposed at the center of the reduction gear 8. A ring gear having internal gear teeth is disposed to surround and engage the planet gears. The ring gear is formed integrally with the aforementioned intermediate bracket 11 by cutting the gear teeth directly in the inner peripheral surface of the intermediate bracket 11. Namely, the cylindrical wall 16 of the intermediate bracket 16 is fixed at its

- 8 -

0086494

left end (see Fig. 1) to the outer wall 15 of the motor 1. The internal gear teeth are cut in the region of the inner surface of the cylindrical wall 16 surounding the front end portion of the armature shaft 5 and extend longitudinally from the left end of the cylindrical wall thereby to form the ring gear 22. The front end 5a of the armature shaft 5 is disposed at the center of the ring gear 22. Gear teeth are cut in the surface of this front end portion 5a to form the sun gear 23 integral with the front end portion 5a. A plurality of planet gears 24 (three planet gears in the embodiment) are disposed between the sun gear 23 and the ring gear 22 so as to mesh with these gears 22 and 23 and to revolve around the sun gear 23. Each planetary gear 24 is carried by a planetary gear shaft 26 attached to a carrier 25 integral with the output shaft 9.

The carrier 25 to which the planetary gear shafts 26 are attached includes two fixing plate members: namely, a fixing plate member 27 located between the output shaft 9 and the armature shaft 5 and fixed to the output shaft, and a fixing plate member 28 adjacent to the motor. The fixing plate member 28 is spaced from and opposes to the fixing plate member 27, and receives the armature shaft 5 rotatably through a bearing 10. Each planetary gear shaft 26 extends between the fixing plate members 27 and 28 and supported at its both ends in the respective plate members 27 and 28. The planet gears 24 carried by these shafts 26 are disposed between two fixing plate members. In this embodiment, fixing rods 29 are extended between two fixing plate members 27 and 28. As will be seen from Fig. 2, the fixing rods 29 are disposed between adjacent planet gears 24 so as not to hinder the rotation of the planet gears 24.

A thrust is generated in the armature 3 in accordance with the rotation of the motor 1. This thrust force is born by a flange 30 formed on the armature shaft 5 so as to oppose to the motor-side fixing plate member 28. A thrust washer 31 is interposed between the flange 30 and the motor-side fixing plate member 28. The thrust force generated on the armature shaft 5 is transmitted to the motor-side fixing plate member 28 through the thrust washer 31 and then to the fixing plate member 27 which is located adjacent to the output shaft and integrally assembled with the fixing plate member 27. A thrust washer 32 is interposed between the fixing plate member 27 and the partition wall 17 of the intermediate bracket 11 facing the fixing plate member 27. As the motor shaft is rotated after the pinion 18 is brought into engagement with the ring gear, thrust force is generated in the output shaft 9 and is transmitted to the armature shaft 5. This thrust force is finally born between the intermediate bracket 11 and the rear bracket 6.

The reduction starter having the described construction operates in a manner explained hereinunder.

As the magnetic switch 20 is energized, the movable core 35 and, hence, the upper end of the shift lever 21 is moved to the left as viewed in Fig. 1 so that the shift lever 21 is rotated counter-clockwise overcoming the forces of the springs 33 and 34. As a result, the pinion 18 slides rightwardly along the output shaft 9 into engagement with the ring gear (not shown) connected to the output shaft of the engine. Simultaneously, electric power is supplied also to the motor 1 and the output torque drived from the armature 3 is transmitted to the output shaft 9 at a reduced speed through the sun gear 23, planet gears 24 and the ring gear 22. In the reduction starter of this embodiment, the ring gear 22 is not formed as a separate body from the intermediate bracket 11 but is formed integrally with the intermediate bracket 11. It is, therefore, possible to reduce the outside diameter of the planetary reduction gear 8. In addition, the number of parts is reduced to facilitate the assembling. If the intermediate bracket 11 integrally formed the ring gear 22 is formed from a sintered alloy, it is possible to eliminate the bearing 12 which is in support of the output shaft 9.

In this starter, the front end portion of the armature shaft 5 is supported through the bearing 10 by the carrier 25 which in turn is supported by the output shaft 9. Thus, the front end portion of the armature shaft 5 is carried by the output shaft 9 through the medium of the carrier 25. According to this arrangement, it is possible to eliminate the intermediate bracket which has been hitherto necessary for supporting the armature shaft 5 and, hence, to shorten the axial length of the starter as a whole. To explain in this connection in more detail, in the known reduction starter, the armature shaft 5 and the output shaft 9 are supported independently of each other at their both ends. In contrast, in the reduction starter of the invention, the axial length can be remarkably decreased because of elimination of the intermediate bracket for supporting the armature shaft 5.

Furthermore, in the planetary reduction gear incorporated in the reduction starter of the invention, the planet gear shafts 26 are not cantilevered but are supported rigidly at their both ends by a pair of fixing plate members 27 and 28, so that the undesirable oscillation of the planetary gears 24 is avoided to ensure a high speed reduction efficiency. This effect is further ensured by the provision of the fixing rods 29. Furthermore, in the described embodiment of the invention, it is possible to free the planet gears 24 and the bearing 10 in the motor-side fixing plate member from the influence of the thrust generated in the armature shaft 5, because the thrust is born by the end surface of the motor-side fixing plate member 28. This also contributes to the increase in the speed reduction efficiency.

As has been described, in the reduction starter of the invention, it is possible to reduce the outside

- 12 -

0086494

diameter of the reduction starter thanks to the formation of the ring gear as a unit with the inner peripheral wall of the intermediate bracket.

In addition, by arranging such that the armature shaft is supported by the carrier which is integral with the output shaft, it is possible to eliminate the bracket for supporting the armature shaft thereby to reduce the axial length of the starter. In consequence, the construction and appearance of the reduction starter can be made compact advantageously.

- 1 -

0086494

WHAT IS CLAIMED IS:

1.      A reduction starter comprising: a motor having an armature shaft; a planetary reduction gear drivingly connected to said armature shaft and adapted to reduce the speed of rotation of said armature shaft; an output shaft drivingly connected to said planetary reduction gear and adapted to be driven rotatingly by the latter at a reduced speed; an intermediate bracket supporting one end of said output shaft and surrounding said planetary reduction gear; and a pinion slidably mounted on said output shaft and adapted to engage with a ring gear connected to an engine thereby to transmit the torque to said engine; said planetary reduction gear including a ring gear integral with said intermediate bracket and having gear teeth formed in the inner peripheral surface of said intermediate bracket.

2.      A reduction starter according to Claim 1, wherein said intermediate bracket is made of a sintered alloy.

3.      A reduction starter according to Claim 1, wherein said planetary reduction gear includes a sun gear integral with said armature shaft and having gear teeth formed directly in the outer peripheral surface of said armature shaft.

4.      A reduction starter according to Claim 1, further comprising a carrier fixed to one end of said output shaft, said carrier carrying planet gears of said planetary reduction gear, said armature shaft being

- 2 -    0086494

carried by said carrier through a bearing.

5.    A reduction starter according to Claim 4, wherein said carrier includes a first fixing plate member fixed to said output shaft, and a second fixing plate member spaced from and opposing to said first fixing plate member and carrying said armature shaft, said planet gears of said planetary reduction gear being held between said fixing plate members in such a manner that planet gear shafts are supported at their both ends by said fixing plate members.

6.    A reduction starter according to Claim 5, wherein said carrier further includes fixing rods which extend between said fixing plate members to connect the latter members together in such a manner as not to hinder the rotation of said planet gears.

7.    A reduction starter according to Claim 5, wherein said second fixing plate member has a thrust receiving surface for receiving the thrust generated in said armature shaft.

# FIG. I

# FIG. 2

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-2 344 152 (KLEIN)<br>* Page 1, left-hand column, line 48 - right-hand column, line 23; figure 1 * | 1,3,4 | F 02 N 15/04<br>F 02 N 15/06<br>H 02 K 7/116 |
| A | FR-A- 385 858 (SCHOEDELIN)<br>* Page 1, line 60 - page 2, line 9; figure 1 * | 1 | |
| A | DE-C- 388 036 (ULRICH)<br>* Page 1, lines 39-66; figures * | 1 | |
| A | FR-A-1 311 876 (F.E.M.S.A.)<br>* Page 1, right-hand column, lines 9-37; figures 1,2 * | 1,3,4 | |
| A | US-A-4 092 946 (KAPPAS)<br>* Column 3, lines 15-25; figure 3 and lines 43-56; figure 1 * | 4,5,7 | TECHNICAL FIELDS SEARCHED (Int. Cl. ³) |
| A | NL-C- 72 538 (OLLAND)<br>* Column 2, lines 39-49; figure 1 * | 4 | F 02 N<br>H 02 K<br>F 16 H |
| A | FR-A-1 267 838 (GRANJON)<br>* Page 1, right-hand column, lines 22-36; figures 1,2 * | 5,6 | |

The present search report has been drawn up for all claims

| Place of search | Date of completion of the search | Examiner |
|---|---|---|
| THE HAGUE | 25-05-1983 | BIJN E.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82